# EUROPEAN PATENT SPECIFICATION

(11) **EP 2 664 548 B1**
(45) Date of publication and mention of the grant of the patent: **18.09.2019**
(21) Application number: 13167712.2
(22) Date of filing: 14.05.2013
(51) Int. Cl.: B64D 43/00, G01M 5/00

(54) **Damage assessment system and method of operating same**
Schadensbeurteilungssystem und Betriebsverfahren dafür
Système d'évaluation des dommages et procédé de fonctionnement associé

(30) Priority: 15.05.2012 US 201213472121
(43) Date of publication of application: 20.11.2013
(73) Proprietor: The Boeing Company, Chicago, IL 60606-1596 (US)
(72) Inventor: Lewis, Arne K., Seattle, WA Washington 98124 (US); Floyd, Joseph Frank, Seattle, WA Washington 98124 (US); Hadley, Brent L., Seattle, WA Washington 98124 (US); Miller, Stephen P., Seattle, WA Washington 98124 (US); Fisher, Phillip J., Seattle, WA Washington 98124 (US)
(74) Representative: Bartelds, Erik

(56) References cited:
- US-A1- 2003 083 794
- US-A1- 2003 191 564
- US-A1- 2008 183 402
- US-B1- 6 219 597

## Description

### BACKGROUND

The present disclosure relates to a damage assessment system, and more specifically, to methods and systems for assessing allowable damage limits for a structure.

Maintenance programs intended to maintain structures in good operating condition may sometimes become complex and burdensome. By way of example, in operating airplanes in North America, Europe, Japan, Australia and in other regulatory jurisdictions which may have a bilateral agreement with the FAA (U.S. Federal Aviation Administration), airlines may need to manage a significant amount of complex and overlapping maintenance requirements set out by the FAA. Compliance with FAA and other requirements by an airline may be required to qualify an airplane for continued airworthiness.

As an aircraft ages or as repairs to the structure age, evaluation may be performed to verify the health of the structure and to confirm that the structure has sufficient remaining strength for continued operations. Structural damage data needs to be interpreted in order to assess the health of a structure. Some known maintenance programs require that personnel interpret this data. Such a program is for example known from document US 6 219 597 B1, which is regarded as the closest prior art and discloses the features of the preambles of claims 1 and 10. Errors can arise due to manual collection and interpretation of the data, leading to errors in assessment of the health of a structure. Variability exists when data of structural components is interpreted manually. For any given structural inspection task, the probability of detection can be affected by several factors such as the skill and experience of the inspector; accessibility to the structure; and exposure of the inspection surface.

Moreover, some known programs for assessing allowable damage limits include field personnel looking up data in structural repair manuals. The assessment, however, can require that the personnel sift through large amounts of data to attempt to locate critical allowance data which is time consuming and inefficient. To successfully manage such a maintenance program, structural and maintenance personnel may need to have a comprehensive and detailed understanding of all the requirements of the maintenance program and of the 3D (three-dimensional) physical locations on structure where the requirements may apply. A program to systematically locate, identify, quantify and/or assess structure damage would enhance better utilization of maintenance programs.

### BRIEF DESCRIPTION

The present invention provides a computer-implemented method as defined in claim 1. The present invention further provides a system as defined in claim 10. The embodiments not covered by the scope of claims 1 and 10 do not form part of the invention but represent background information which is useful for understanding the inventive concept.

In one aspect, a computer-implemented method of assessing a damage of a structure is provided. The computer-implemented method includes receiving damage information into a user interface device and quantifying at least one parameter of the damage. The computer-implemented method further includes performing a structural analysis to determine a damage allowability based on the at least one parameter. The computer-implemented method displays an output result of the structural analysis from the user interface device.

In another aspect, a system to assess an allowable damage limit for a damage of a structure is provided. The system includes a compliance system having a database of structural information relating to the structure. A computer enabled user interface device is coupled to the compliance system. The computer enabled user interface device includes a processor configured to access or receive the structural information and display a location of the damage based on the structural information. The processor is configured to quantify at least one parameter of the damage. The processor is further configured to perform a structural analysis to determine a damage allowability based on the at least one parameter and display a maintenance instruction based on the damage allowability.

In an embodiment of the a system to assess an allowable damage limit for a damage of a structure of the type described above, the processor is configured to electronically document the maintenance instruction.

The user interface may be a hand-held device.

In a further aspect, a computer-implemented method of performing maintenance on a damage of a structure is provided. The computer-implemented method includes locating a damage area; accessing the damage area; and receiving damage information by a user interface device. The computer-implemented method further includes quantifying at least one parameter of the damage and performing a structural analysis to determine a damage allowability based on the at least one parameter. The computer-implemented method includes displaying maintenance instructions based on the structural analysis from the user interface device and includes performing a maintenance response on the damage.

In an embodiment of this computer-implemented method, locating the damage area may comprise identifying a structure type of the structure.

In another embodiment of this computer-implemented method, accessing the damage area may comprise exposing the damage.

In yet another embodiment of the computer-implemented method, accessing the damage area may comprise identifying a damage type of the damage.

### BRIEF DESCRIPTION OF THE DRAWINGS

Figure 1 illustrates a schematic diagram of an exemplary damage assessment system that may be used to assess an allowable damage limit of a structure.
Figure 2 illustrates a flow diagram of an exemplary process to select a damage area of the structure shown in Figure 1.
Figure 3 illustrates a flow diagram of an exemplary process to select a damage type for the damage area shown in Figure 2.
Figure 4 illustrates a flow diagram of an exemplary process to locate the damage type shown in Figure 3.
Figure 5 illustrates a flow diagram of an exemplary process to select a damage zone of the damage type shown in Figure 4.
Figure 6 illustrates a flow diagram of an exemplary process to quantify the damage type.
Figure 7 illustrates a flow diagram of an exemplary process to perform maintenance on a damage area.
Figure 8 illustrates a schematic diagram of an exemplary table of data relating to an allowable damage limit.
Figure 9 illustrates a schematic diagram of an exemplary damage assessment that may be used with the system shown in Figure 1.
Figure 10 illustrates a schematic diagram of an exemplary damage assessment that may be used with the system shown in Figure 1.
Figure 11 illustrates a schematic diagram of an exemplary damage assessment that may be used with the system shown in Figure 1.
Figure 12 illustrates a flow chart of an exemplary method that may be implemented to operate an exemplary damage assessment system.
Figure 13 illustrates a flow diagram of an exemplary vehicle production and service methodology.
Figure 14 illustrates a schematic diagram of an exemplary vehicle structure.
Figure 15 illustrates a side elevational view of an exemplary vehicle structure.

### DETAILED DESCRIPTION

The embodiments described herein relate to a damage assessment system and methods of operating the system. More particularly, the embodiments relate to a system for locating and identifying damage areas and quantifying and assessing structural damage present in the damage areas. Moreover, the embodiments are utilized in a variety of environments such as, but not limited to, military, civil, building, industrial, rail, shipping, aerodynamic and consumer environments. The embodiments described herein facilitate locating, quantifying and analyzing damage to reduce maintenance time and downtime of structures. A user interface device facilitates electronic damage assessment and recordation of repair procedures applied to the damage. In one application, the damage assessment system described herein is utilized for damage applied to the vehicle. It should be understood that the description and figures that utilize vehicles are exemplary only.

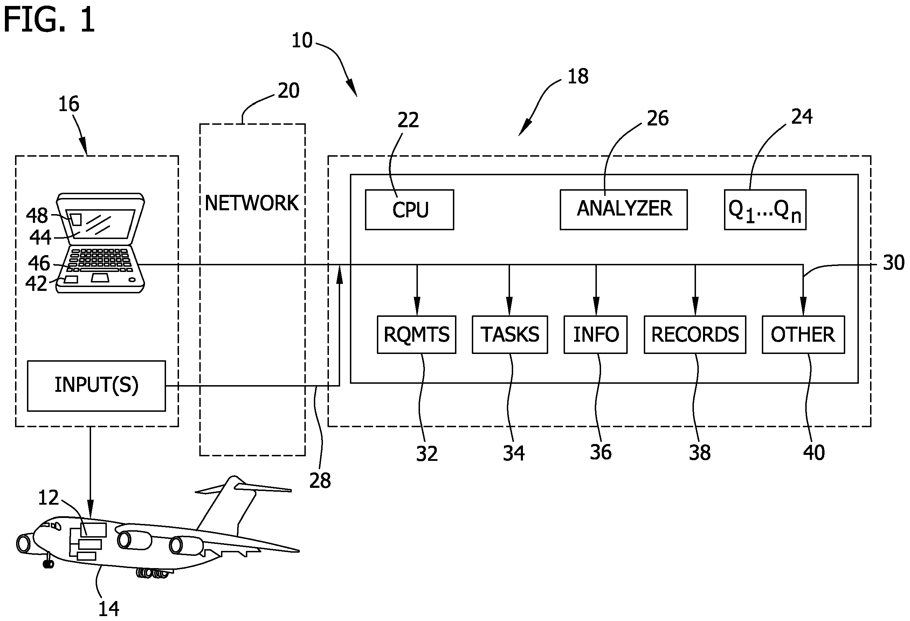

Figure 1 illustrates a schematic diagram of an exemplary damage assessment system 10 that is configured to assess a damage 12 of a structure 14. In the exemplary embodiment, structure 14 includes a vehicle such as, but not limited to, an aircraft, a spacecraft, a launch vehicle, seaborne or undersea vessel, ground based vehicle, mechanical devices and/or after machinery that receive maintenance. System 10 includes a user interface device 16 coupled to a 3D compliance management system 18 by a network 20. Network 20 may be embodied, by example only and not by way of limitation, in the Internet or another communication network. Alternatively, compliance management system 18 may be implemented by or embodied in user interface device 16.

Management system 18 may be implemented by or embodied in a central processing unit 22. Management system 18 is configured to facilitate mapping, in 3D coordinates, areas, zones and specific locations of damage 12 on and/or within structure 14. Compliance management system 18 includes a structure database 24 such as, but not limited to, toolbox and/or knowledge tree databases having information relating to specific locations of damage of structure 14. Moreover, management system 18 includes a damage analyzer 26 that is configured to perform a structural analysis to determined damage allowability of damage 12. In the exemplary embodiment, structure database 24 includes a query of questions 78 relating to structure locations. Moreover, compliance management system 18 includes a program to generate questions 78 relating to structure locations based on inputs 28 provided by user interface device 16. Management system 18 includes data functional blocks 30. Data functional blocks 30 include a requirements data functional block 32, a tasks data functional block 34, an information data functional block 36, a records data functional block 38 and other data functional blocks 40.

In the exemplary embodiment, user interface device 16 is computer enabled having a central processing unit 42, a screen 44, an input device 46, such as for example a keyboard, and a database 48. As used herein, the term central processing unit is not limited to integrated circuits referred to in the art as a computer, but broadly refers to a microcontroller, a microcomputer, a programmable logic controller (PLC), an application specific integrated circuit, and other programmable circuits, and these terms are used interchangeably herein. In the embodiments described herein, memory may include, but is not limited to, a computer-readable medium, such as a random access memory (RAM), and a computer-readable non-volatile medium, such as flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may include, without limitation, computer peripherals associated with an operator interface, such as a mouse and a keyboard. Alternatively, other computer peripherals may also be used that may include, without limitation, a scanner. Furthermore, in the exemplary embodiment, additional output channels may include, without limitation, an operator interface monitor. In the exemplary embodiment, central processing unit includes mobile communication and computing device such as, but not limited to, a cell phone, a personal digital assistant, and a computer laptop. User interface device 16 may be implemented using any appropriate combination of software and/or hardware configured for wired and/or wireless communication.

Moreover, in the exemplary embodiment, processes are illustrated as a collection of blocks in logical flow graphs, which represent a sequence of operations that can be implemented in hardware, software, or a combination thereof. In the context of software, the blocks represent computer-executable instructions that, when executed by one or more processors, cause the one or more processors to perform the recited operations. Generally, computer-executable instructions include routines, programs, objects, components and data structures that perform particular functions or implement particular abstract data types. The order in which the operations are described is not intended to be construed as a limitation, and any number of the described blocks can be combined in any order and/or in parallel to implement the process. Processes may be performed, at least in part, by user interface device 16.

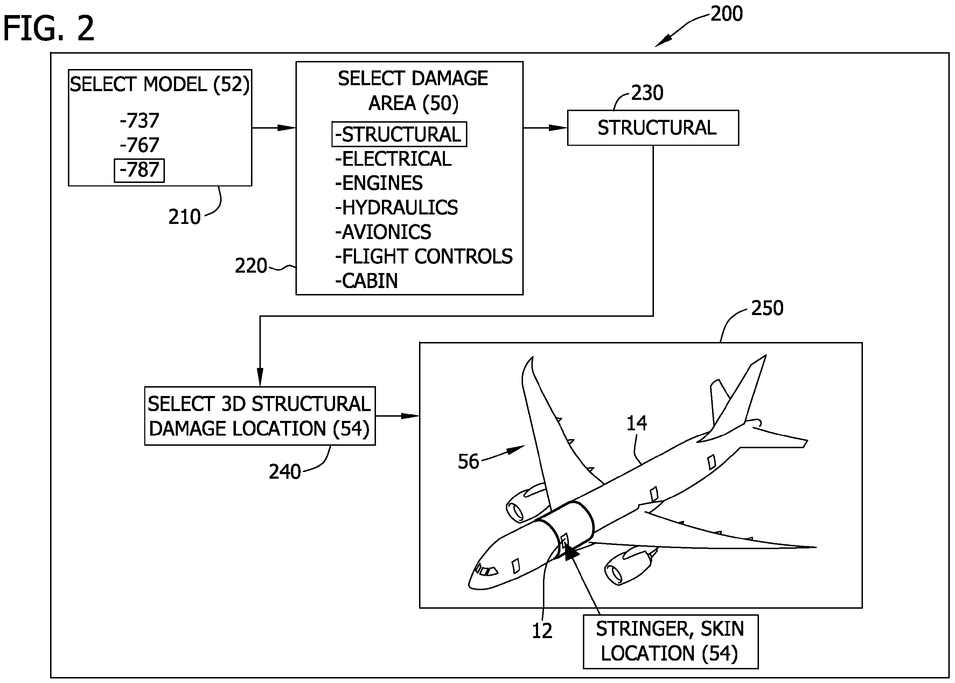

Figure 2 illustrates an exemplary process 200 that is configured to identify and select a damage area 50 of structure 14. At block 210, a decision is made as to whether to select a model 52 of structure 14. In the exemplary embodiment, one selected model 52 is highlighted, a list of damage areas 50 is displayed by user interface device 16 at block 220. Damage areas 50 include areas such as, but not limited to, structural, electrical, engines, hydraulics, avionics, flight controls, and cabins. At block 220, the decision is made to select damage area 50. Selected damage area 50 is displayed by user interface device 16 at block 230. One selected damage area 50 is highlighted, at block 240, a decision is made to select a 3D structural damage location 54 on a 3D model 56 of structure 14. In the exemplary embodiment, 3D model 56 is provided to user interface device 16 by compliance management system 18. Alternatively, 3D model 56 and associated structural locations 54 may be stored in database 48 of user interface device 16. At block 250, structural damage location 54 is selected via user interface device 16 to facilitate graphically highlighting damage area 50.

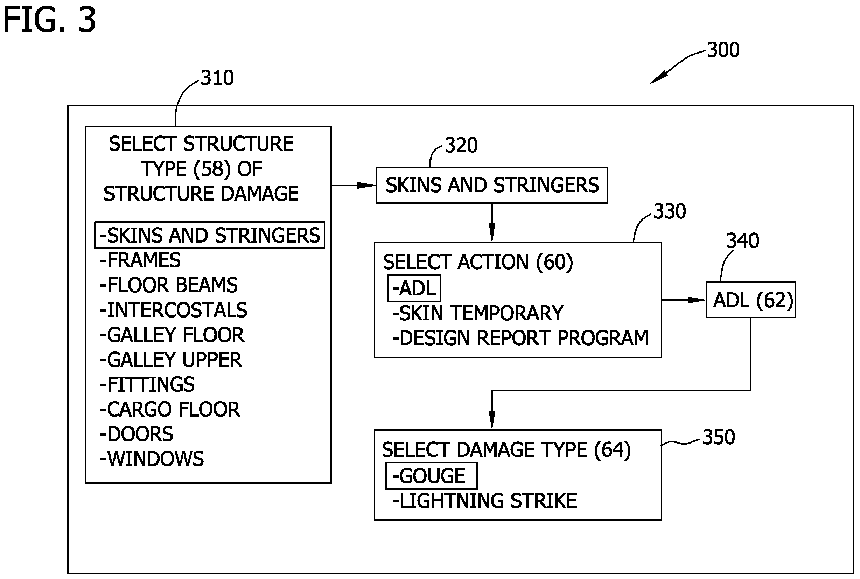

Figure 3 illustrates an exemplary process 300 to select a structure type 58 within damage area 50 (shown in Figure 2). At block 310, a list of structure types 58 is displayed by user interface device 16. Structure type 58 includes types such as, but not limited to, skins and stringers, frames, floor beams, intercostals, galley upper, galley floor, fittings, cargo floor, doors, and windows. At block 320, a decision is made to select structure type 58. In the illustrated example, "skin and stringers" type is selected and displayed by user interface device 16. At decision block 330, a determination is made to select a desired maintenance action 60. Maintenance action 60 includes categories such as, but not limited to, allowable damage limit assessment (ADL), document damage data, and design report program. Any type of maintenance action 60 can be presented to enable system 10 to function as described herein.

In the exemplary embodiment, allowable damage limit assessment 62 is selected via user interface device 16 at block 340. At block 350, a list of damage types 64, such as but not limited to, gouges and lightning strikes, is displayed by user interface device 16. A determination is made to select damage type 64. In the illustrative example, "gouge" is selected and highlighted by user interface device 16.

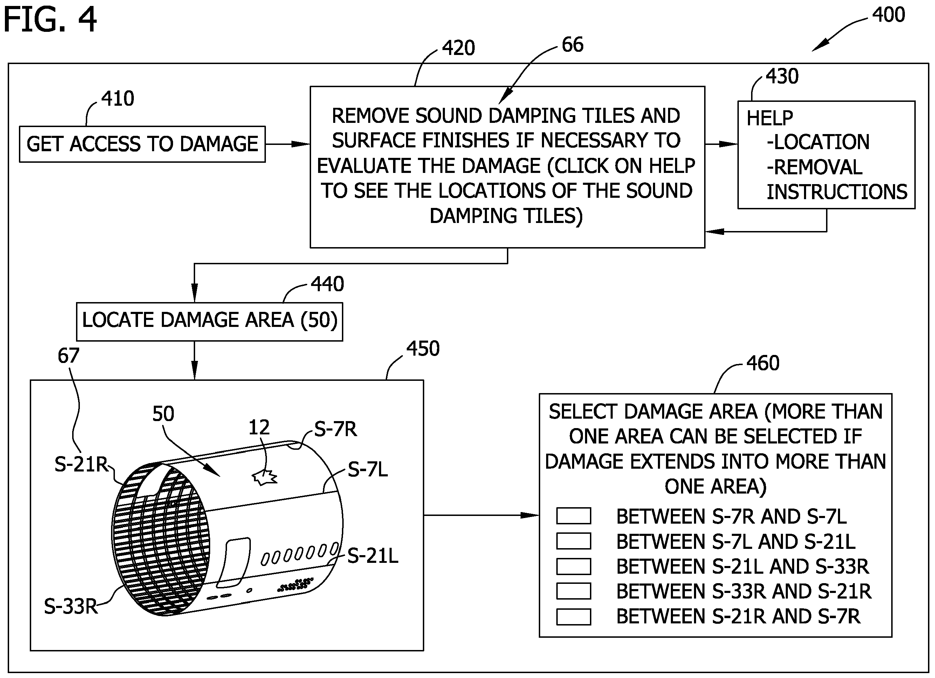

Figure 4 illustrates an exemplary process 400 that is configured to access damage 12. In the exemplary embodiment, structure type 58 (shown in Figure 3) can be embodied within and/or hidden by other components (not shown) to limit and/or prevent access to structure type 58. For example, structure type 58 may be coupled to sound damping tiles and/or coupled to surface finishes (not shown). Based on structure type 58, at block 410, user interface device 16 displays that access to damage 12 is required. At block 420, instructions 66 are displayed by user interface device 16 to instruct access to damage 12. As an illustrative example, block 420 provides instructions 66 to remove sound damping tiles and surface finishes to facilitate exposing damage 12. At help block 430, a determination is made as to whether instructions 66 are required to access damage 12. For example, block 430 illustrates location of the sound damping tiles and provides removal instructions.

At block 440, damage area 50 is displayed by user interface device 16. More particularly, block 450 graphically illustrates damage area 50. In the exemplary embodiment, block 450 graphically illustrates in 3D representative damage areas 50. Alternatively, block 450 can display textual descriptions for damage area 50. In the exemplary embodiment, 3D graphical representation of damage area 50 is provided to user interface device 16 by compliance management system 18. Alternatively 3D graphical representation of damage area 50 may be stored in database 48 of user interface device 16. At block 460, a list of damaged areas 50 is displayed by user interface device 16. In the exemplary embodiment, damage areas 50 are defined by graphics correlating to areas of structure 14. In the illustrative example, damage areas 50 are defined by indicia 67 such as "S-21R" as representing a particular string of structure 14. Alternatively, any type of indicia 67, such as graphical fonts, photographs and videos, can be used to identify damage area 50. Moreover, at block 460, more than one damage area 50 can be selected by user interface device 16 if damage extends into more than one area.

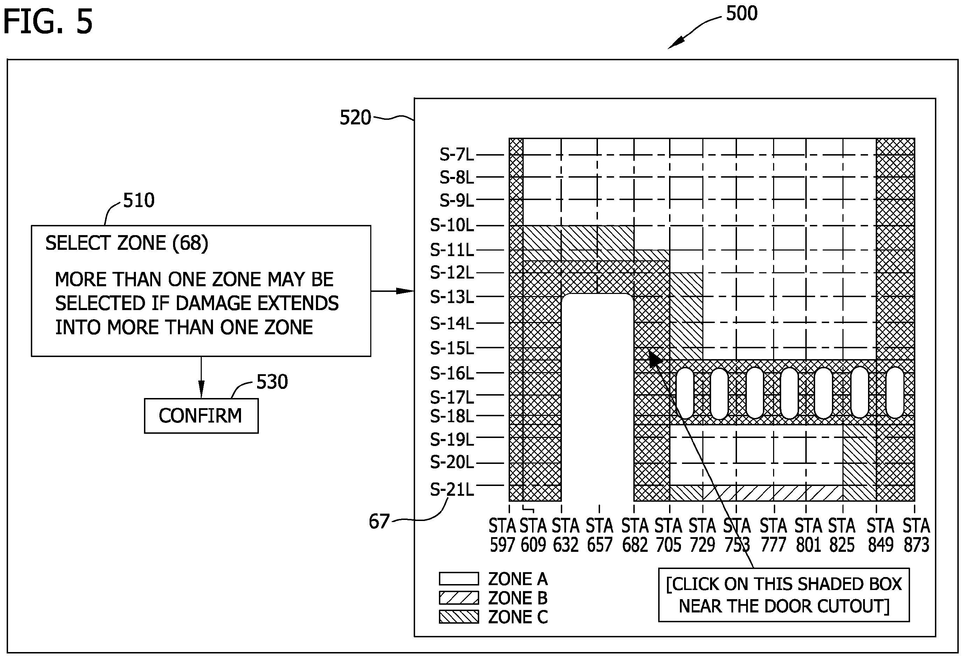

Figure 5 illustrates an exemplary process 500 to select a damage zone 68 of damage area 50 (shown in Figure 4). At block 510, damage zone 68 is displayed and selected by user interface device 16. In the exemplary embodiment, block 520 graphically illustrates damage zone 68. Alternatively, block 520 can textually describe damage zone 68. In the exemplary embodiment, damage zones 68 are defined by indicia 67 that classify damage zones 68 of structure 14. In an illustrative example, damage zones 68 are defined by indicia 67 such as specific stringer and/or skin indicia 67 to identify damage zones 68. Moreover, at block 520, more than one damage zone 68 can be selected if damage extends into more than one damage zone 68. At block 530, a confirmation request is displayed by user interface device 16 to determine that correct damage zone 68 has been selected.

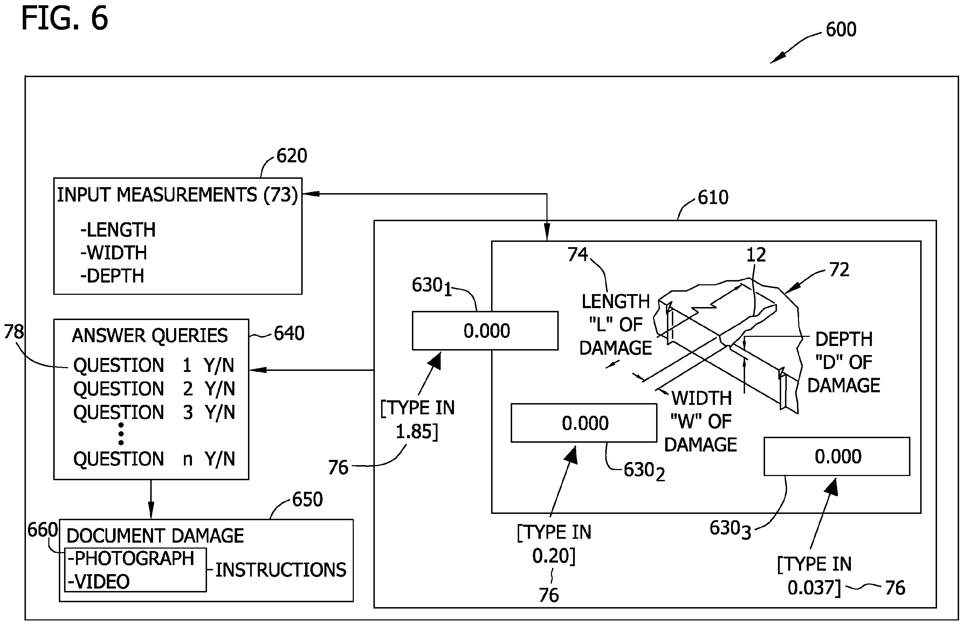

Figure 6 illustrates an exemplary process 600 to quantify damage 12. At block 610, user interface device 16 is configured to graphically display damage 12. Alternatively, at block 610, user interface device 16 can textually describe damage 12. In an illustrative example, since "gouge" was selected as damage type 64 by user interface device 16 (shown in Figure 3), block 610 displays a graphical representation 72 of a "gouge". Moreover, at block 610, at least one parameter 74 of damage 12 is presented. In the exemplary embodiment, parameter 74 includes quantifiable information such as, but not limited to, dimensions, materials, positions and colorizations of damage 12. Alternatively, any type of quantifiable information may be used to enable system to function as described herein. As an illustrative example, at least one parameter 74 includes a length "L" of damage 12, a width "W" of damage 12 and a depth "D" of damage 12.

At block 620, quantifiable information 73, relating to parameter 74, is inputted into user interface device 16. More particularly, at block 630₁, 630₂ and 630₃, specific entries 76 for quantifiable information 73 are displayed by user interface device 16. In an illustrative example, a measured dimension for damage length L (for example 1.85 in) is inputted at block 630₁; a measured dimension for damage width W (for example 0.20 in) is inputted at block 630₂ and a measured dimension for damage depth D (for example 0.037 in) is inputted at block 630₃.

As parameters 74 are inputted at block 620, user interface device 16 is configured to display at least one question 78 relating to damage parameters 74 at block 640. Block 640 displays questions 78 with a "Yes" answer selection and a "No" answer selection. In the exemplary embodiment, questions 78 further define aspects of damage 12 as related to structure 14. At block 640, answers are inputted into user interface device 16 by selecting appropriate "Yes" answer or "No" answer.

At block 650, a determination is made to document damage 12. More particularly, damage 12 is documented by a procedure such as, but not limited to, photographing damage, video recording damage and/or electronically imputing a text description of damage. At block 660, instructions for damage documentation, such as how to photograph damage 12, are displayed by user interface device 16.

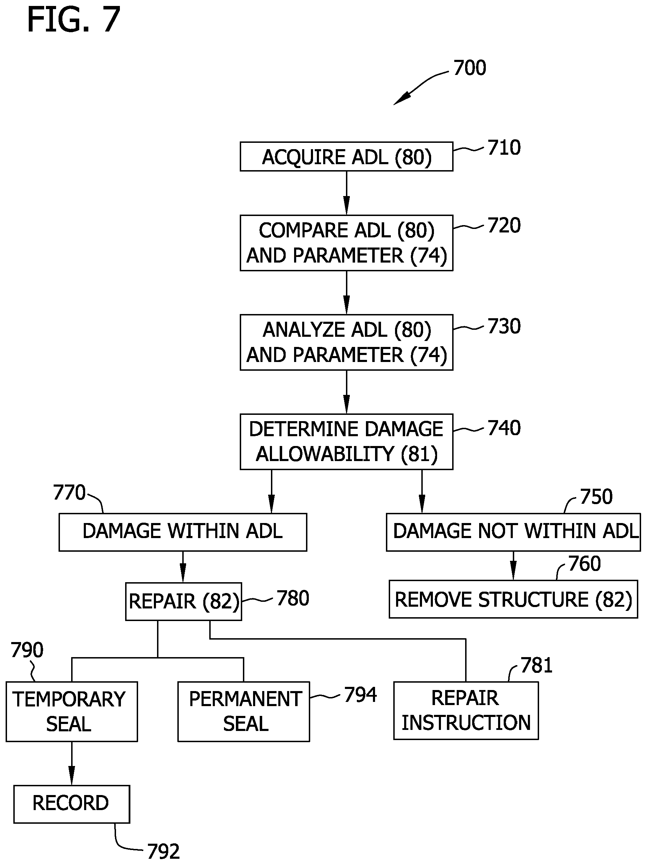

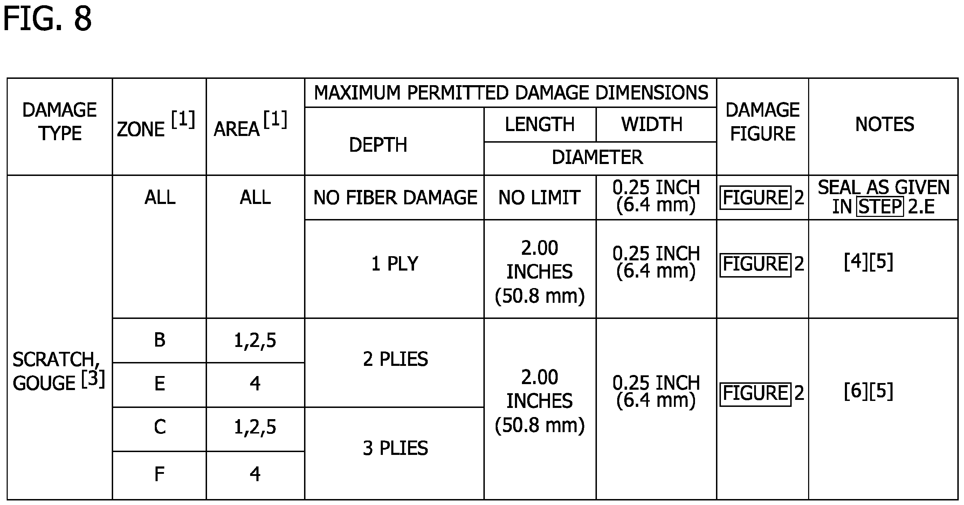

Figure 7 illustrates an exemplary process 700 to perform a structural analysis of damage area 50. At block 710, a database of allowable damage limits 80 is acquired by user interface device 16 from compliance management system 18 (shown in Figure 1). Alternatively, user interface device 16 can be loaded with allowable damage limits 80. Figure 8 illustrates an exemplary database listing allowable damage limits 80. At block 720, allowable damage limits 80 are compared to at least one parameter 74. At block 730, analyzer 26 (shown in Figure 1) is configured to conduct and analyze allowable damage limits 80 and at least one parameter 74. A determination for a damage allowability 81 is made at block 740.

At block 750, a determination is made that damage 12 is not within allowable damage limit 80. A maintenance response 82 is displayed by user interface device 16 at block 760 based on the determination. More particularly, user interface device 16 displays that structure 14 is to be removed from service as maintenance response 82.

At block 770, a determination is made that damage 12 is within allowable damage limits 80. Maintenance response 82 is displayed by user interface device 16 at block 780. More particularly, user interface device 16 displays that structure 14 is to be repaired at block 780. In the exemplary embodiment, user interface device 16 displays a repair instruction 781 such as, but not limited to, that a temporary seal is to be applied to damage 12 at block 790. A record of temporary seal is recorded by user interface device 16 at block 792. More particularly, record of temporary repair at damage area 50 is coupled to database 48 to further document a permanent seal is to be made prior to predetermined number of life cycles of structure 14. Alternatively, at block 794, user interface device 16 displays that a permanent seal is to be applied to damage 12 as maintenance response 82.

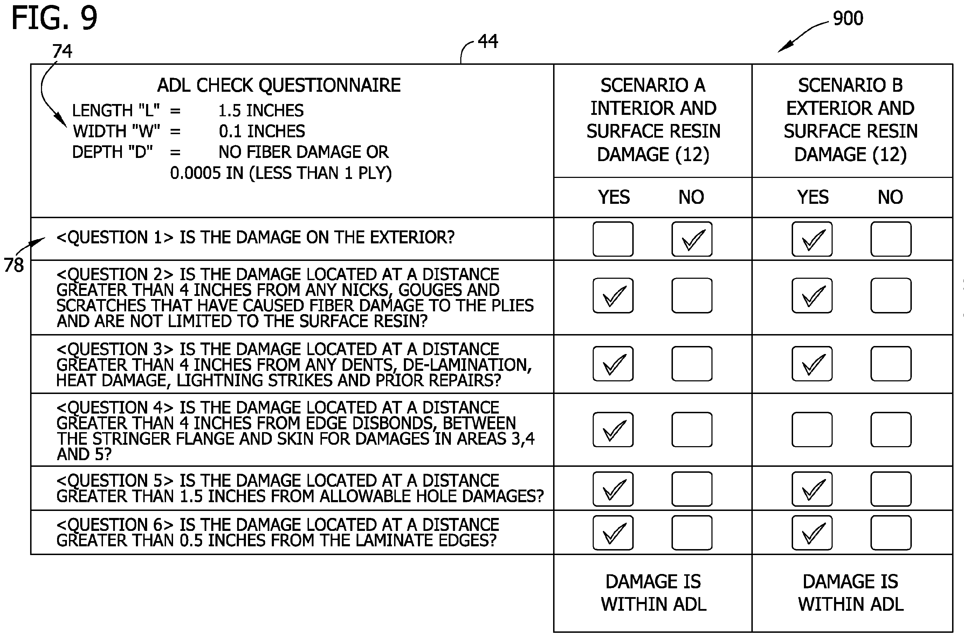

Figure 9 illustrates a schematic diagram of an exemplary damage assessment 900 displayed by screen 44 of user interface device 16. More particularly, representative data for parameters 74 are illustrated for damage length L, damage width W and damage depth D. Moreover, representative "Scenario A" is illustrated for interior and surface resin damage 12. Representative "Scenario B" is illustrated for exterior and surface resin damage 12. Questions 78 are displayed by user interface device 16 for comparing allowable damage limits 80 to parameters 74. Moreover, inputted answers are illustrated by representative checks applied to "Yes" answer and/or "No." Analyzer 26 (shown in Figure 1) is configured to determine damage allowability 81 based on the comparison of allowable damage limits 80 and parameters 74. User interface device 16 displays an analysis conclusion as a highlighted result: "Damage is within ADL."

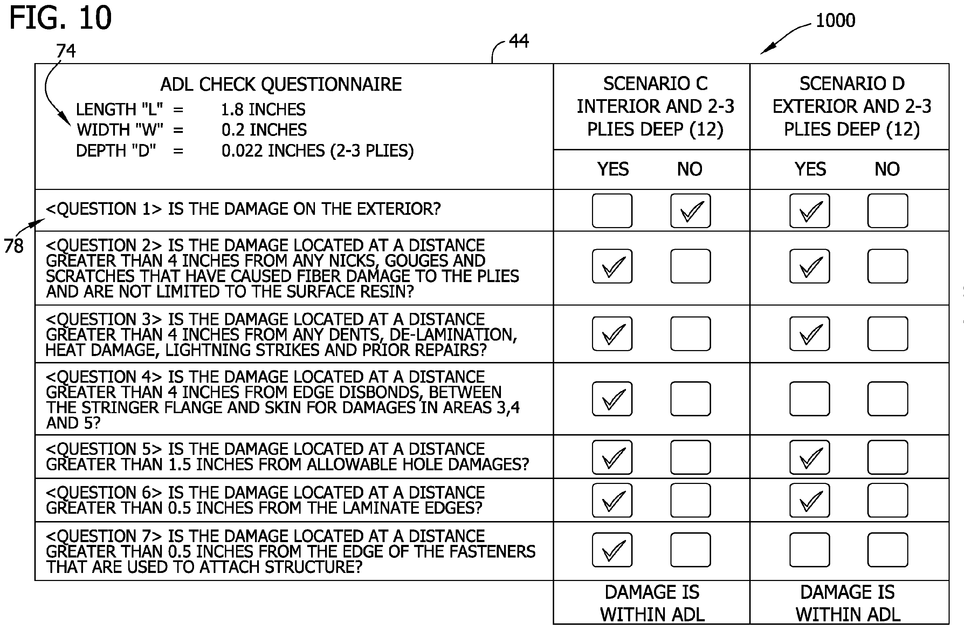

Figure 10 illustrates a schematic diagram of an exemplary damage assessment 1000 displayed by screen 44 of user interface device 16. More particularly, representative data for parameters 74 are illustrated for damage length L, damage width W and damage depth D. Moreover, representative "Scenario A" is illustrated for interior and surface resin damage 12. Representative "Scenario B" is illustrated for exterior and surface resin damage 12. Questions 78 are displayed by user interface device 16 for comparing allowable damage limits 80 to parameters 74. Moreover, inputted answers are illustrated by representative checks applied to "Yes" answer and/or "No." Analyzer 26 (shown in Figure 1) is configured to determine damage allowability 81 based on the comparison of allowable damage limits 80 and parameters 74. User interface device 16 displays an analysis conclusion as a highlighted result: "Damage is within ADL."

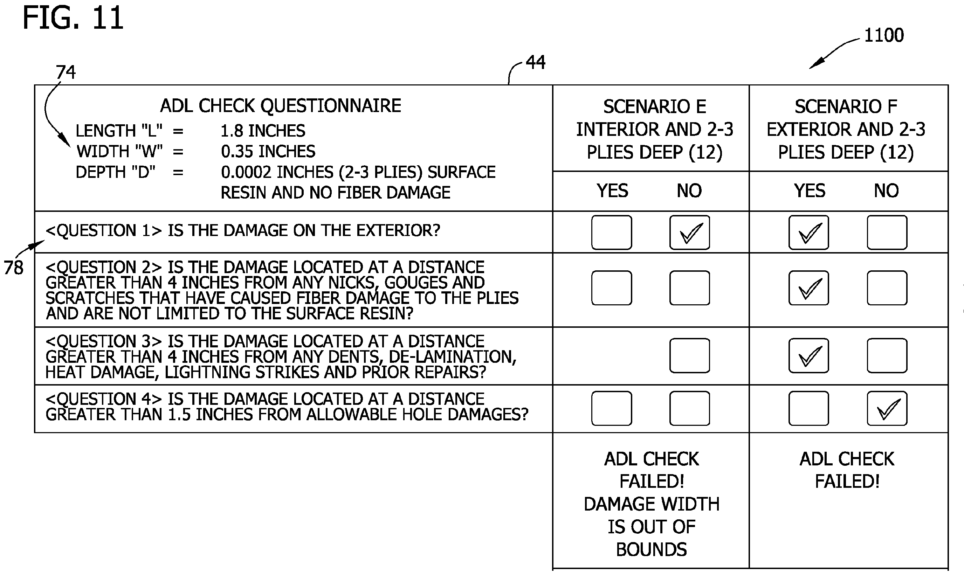

Figure 11 illustrates a schematic diagram of an exemplary damage assessment 1100 displayed by screen 44 of user interfaced device. More particularly, representative data for parameters 74 are illustrated for damage length L, damage width W and damage depth D. Moreover, representative "Scenario A" is illustrated for interior and surface resin damage 12. Representative "Scenario B" is illustrated for exterior and surface resin damage 12. Questions 78 are displayed by user interface device 16 for comparing allowable damage limits 80 to parameters 74. Moreover, inputted answers are illustrated by representative checks applied to "Yes" answer and/or "No." Analyzer 26 (shown in Figure 1) is configured to determine damage allowability 81 based on the comparison of allowable damage limits 80 and parameters 74. User interface device 16 displays an analysis conclusion as a highlighted result: "ADL Check Failed."

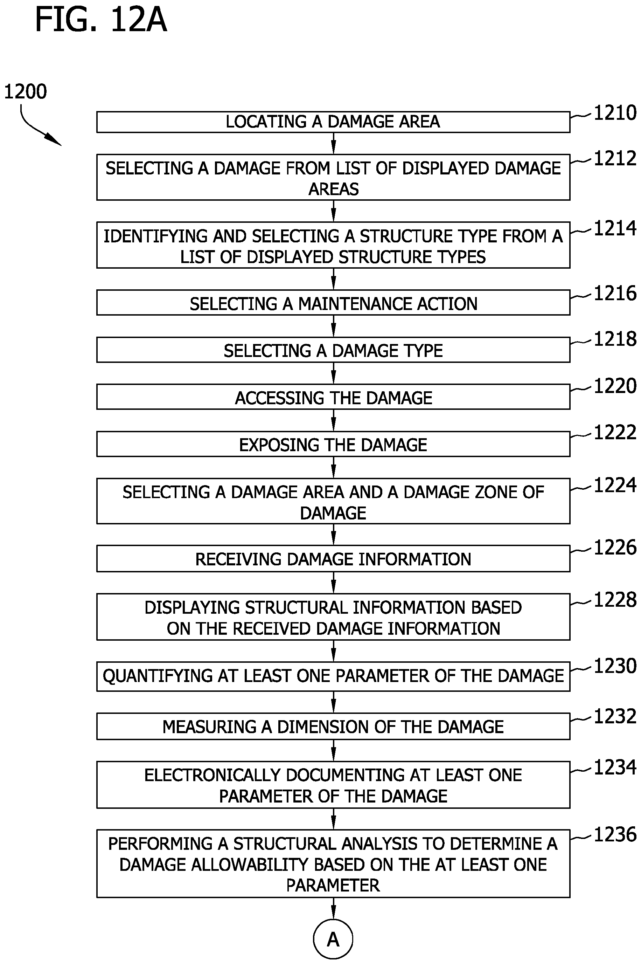

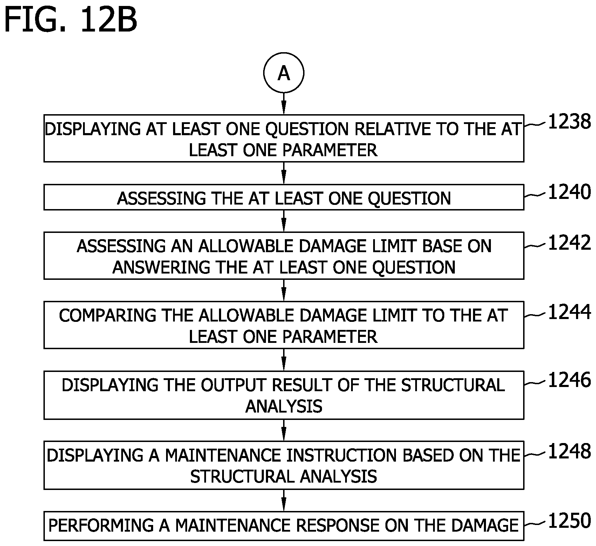

Figure 12 illustrates an exemplary method 1200 for assessing damage 12 of structure 14 via user interface device 16. During operations such as, but not limited to, maintenance, repair and/or replacement operations, user interface device 16 is utilized to locate and identify damage area 50 and quantify damage 12 present in damage area 50. Initially, in the exemplary method, damage area 50 is located 1210. Method 1200 includes selecting 1212 damage area 50 from a list of displayed damage areas 50. In the exemplary method, a 3D graphical representation of damage area 50 is selected.

Method 1200 includes identifying and selecting 1214 structure type 58 from a list of displayed structure types 58. A maintenance action 60, that is relative to selected structure type 58, is selected 1216 and damage type 64 is selected 1218. Method 1200 includes accessing damage 1220. More particularly, damage 12 is exposed 1222 by removing any component and/or finish that inhibits access to damage 12. In the exemplary method 1200, damage area 50 and more particularly damage zones 68 are selected 1224.

After damage area 50 and damage zone 68 are selected 1224, user interface device 16 receives 1226 damage information. In the illustrative method, damage information relates to information such as, but not limited to, structure type 58, damage type 64, damage area 50 and damage zone 68. Method 1200 includes displaying 1228 structural information based on receiving damage information. At least one parameter 74 of damage 12 is quantified 1230. More particularly, quantifying 1230 at least one parameter 74 includes measuring 1232 dimensions of damage 12. In the exemplary method 1200, at least one parameter 74 and damage 12 are electronically documented 1234 by user interface device 16.

Method 1200 includes performing 1236 a structural analysis to determine damage allowability 81 based on at least one parameter 74. More particularly, at least one question 78 relative to the at least one parameter 74 is displayed 1238. Moreover, method 1200 includes assessing 1240 the at least one question 78 and assessing 1242 allowable damage limits 80 based on answering the at least one question 78. In the exemplary method 1200, allowable damage limit 80 is compared 1244 to the at least one parameter 74.

Method 1200 includes displaying 1246 output result of the structural analysis from user interface device 16. More particularly, a maintenance response 82 is displayed 1248 based on the structural analysis and allowable damage limit 80. Method 1200 includes performing 1250 maintenance response 82 on damage 12.

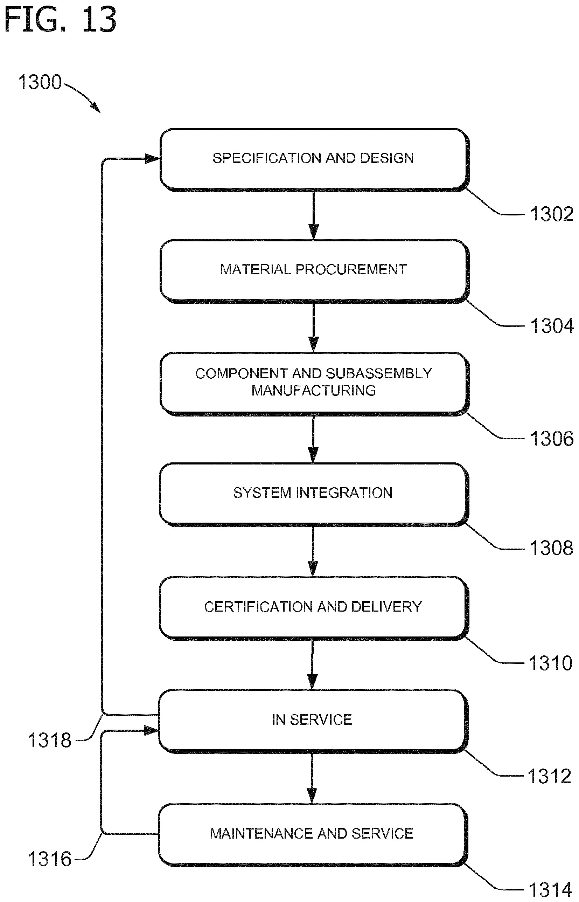

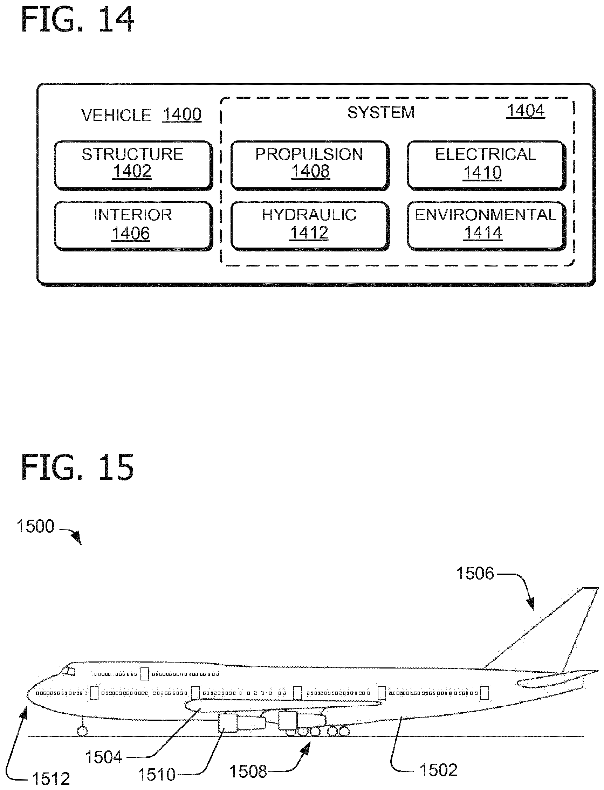

Embodiments of the disclosure may be described in the context of an illustrative vehicle manufacturing and service process 1300 as shown in Figure 13 and an illustrative vehicle 1400 as shown in Figure 14. During pre-production, exemplary process 1300 may include specification and design 1302 of vehicle 1400 and material procurement 1304. During production, component and subassembly manufacturing 1306 and system integration 1308 of vehicle 1400 are conducted. Thereafter, vehicle 1400 may go through certification and delivery 1310 in order to be placed in-service 1312. While in-service by a customer, vehicle 1400 is scheduled for routine maintenance and service 1314 (which may also include modification, reconfiguration, refurbishment, and so on). In accordance with various embodiments, an analysis system (not shown) may be employed at the in-service 1312 in anticipation of vehicle maintenance and service 1314. In some embodiments, vehicle 1400 may undergo maintenance during scheduled or unscheduled intervals via a route 1316 that links the in-service operation 1312 and the maintenance and service operations 1314 to create a recursive process. Vehicle 1400 may also undergo an upgrade via a route 1318 that links the in-service operation 1312 and the specification and design 1302 to create another recursive process. The upgrade may include an installation of a new system or component on an existing vehicle.

Each of the processes of method 1300 may be performed or carried out by a system integrator, a third party, and/or an operator (e.g., a customer). For the purposes of this description, a system integrator may include without limitation any number of vehicle manufacturers and major-system subcontractors; a third party may include without limitation any number of venders, subcontractors, and suppliers; and an operator may be an airline, leasing company, military entity, service organization, and so on.

The various techniques embodied herein may be employed during any one or more of the stages of the production and service method 1300. For example, one or more of embodiments of fleet maintenance application, may be utilized while vehicle 1400 is in-service 1312 and/or at the maintenance and service 1314.

As shown in Figure 14, vehicle 1400 includes a structure (frame) 1402 with a plurality of systems 1404 and an interior 1406. Examples of systems 1404 include one or more of a propulsion system 1408, an electrical system 1410, a hydraulic system 1412, and an environmental system 1414. Any number of other systems may be included. The principles of the invention may be applied to many industries, such as the aerospace industry, the automotive industry, and so forth.

Figure 15 is a side elevational view of an illustrative aircraft 1500, which may experience fleet maintenance that is performed using the techniques and methodologies disclosed herein. In this embodiment, aircraft 1500 includes a fuselage 1502 including wing assemblies 1504, a tail assembly 1506, and a landing assembly 1508. The aircraft 1500 further includes one or more propulsion units 1510, a control system 1512, and a host of other systems and subsystems that enable proper operation of the aircraft 1500. One should appreciate that many parts included in an aircraft may be identified using 3D imagery using the techniques disclosed herein. In general, the various components and subsystems of the aircraft 1500 may be of known construction and, for the sake of brevity, will not be described in detail herein.

Although the aircraft 1500 shown in Figure 15 is generally representative of a commercial passenger aircraft; however, the embodiments described herein may be applied to the maintenance, manufacture, and assembly of other passenger aircraft, fighter aircraft, cargo aircraft, rotary aircraft, and any other types of manned or unmanned aircraft, as well as other types of vehicles disclosed herein.

The embodiments described herein systematically locate and identify damage areas and quantify and assess structural damage present in damage areas. The embodiments successfully manage a maintenance program to provide structural and maintenance personnel a comprehensive and detailed program of all the requirements of the maintenance program and of the 3D physical locations on structure where the requirements may apply. The embodiments described herein provide a program to systematically locate, identify, quantify and/or assess structure damage to facilitate enhancing better utilization of maintenance programs. The embodiments include the hand-held user interface device that provides a structured method to efficiently locate, document and repair damage for convenient access by personnel within a program to enhance better utilization of maintenance information and to improved collaboration across a maintenance program.

The embodiment described herein may include, an automotive vehicle, an aircraft vehicle, or a civil engineering structure. For example, if the assessment system is deployed in a civil application, the damage may be located underneath a bridge or to a beam in a building. The assessment system may be used to monitor health of the structure to determine whether, for example, the structure is in danger of buckling or collapsing.

Exemplary embodiments of systems and methods for a damage assessment system are described above in detail. The systems and methods are not limited to the specific embodiments described herein, but rather, components of systems and/or steps of the method may be utilized independently and separately from other components and/or steps described herein. Each component and each method step may also be used in combination with other components and/or method steps. Although specific features of various embodiments may be shown in some drawings and not in others, this is for convenience only. Any feature of a drawing may be referenced and/or claimed in combination with any feature of any other drawing.
This written description uses examples to disclose the invention, including the best mode, and also to enable any person skilled in the art to practice the invention, including making and using any devices or systems and performing any incorporated methods. The
patentable scope of the invention is defined by the claims.

## Claims

1. A computer-implemented method of assessing a damage of a structure (14) by a user interface device (16), the method comprising:
receiving damage information by the user interface device (16);
quantifying at least one parameter of the damage;
performing a structural analysis to determine a damage allowability based on the at least one parameter (74); and
displaying an output result of the structural analysis from the user interface device (16),
**characterized in that**
performing the structural analysis to determine the damage allowability comprises generating at least one question (78) based on the at least one parameter (74).

2. The computer-implemented method of Claim 1, wherein performing the structural analysis to determine the damage allowability comprises displaying the at least one question (78) relating to the at least one parameter (74).

3. The computer-implemented method of Claims 1 or 2, wherein performing the structural analysis to determine the damage allowability comprises answering the at least one question (78).

4. The computer-implemented method of Claim 3, wherein performing the structural analysis to determine the damage allowability comprises assessing an allowable damage limit based on answering the at least one question (78).

5. The computer-implemented method of Claim 4, wherein performing the structural analysis to determine the damage allowability comprises comparing the allowable damage limit to the at least one parameter (74).

6. The computer-implemented method of any of Claims 1-5, wherein receiving the damage information comprises displaying structural information of the structure.

7. The computer-implemented method of any of Claims 1-6, wherein quantifying the at least one parameter (74) comprises measuring the damage.

8. The computer-implemented method of any of Claims 1-7, wherein quantifying the at least one parameter (74) comprises electronically documenting the damage.

9. The computer-implemented method of any of Claims 1-8, wherein displaying the output result comprises displaying maintenance instructions.

10. A system to assess an allowable damage limit for a damage of a structure, said system comprising:
a compliance system having a database (24) of structural information relating to the structure; and
a computer enabled user interface device (16) coupled to said compliance system, said user interface device (16) having a processor configured to:
receive the structural information;
display a location of the damage based on the structural information;
quantify at least one parameter (74) of the damage;
perform a structural analysis to determine a damage allowability based on the at least one parameter (74); and
display a maintenance instruction based on the damage allowability;
**characterized in that**
said processor is configured to determine the damage allowability by generating at least one question (78) based on the at least one parameter (74).

11. The system of Claim 10, wherein the at least one parameter (74) comprises at least one of a length dimension, a width dimension and a depth dimension of the damage.

12. The system of Claim 10, wherein said structural information comprises at least one question (78) relating to the damage.

13. The system of Claim 10, wherein said maintenance instruction comprises a repair instruction.

## Patentansprüche

1. Computerimplementiertes Verfahren zum Beurteilen eines Schadens einer Struktur (14) mittels einer Benutzerschnittstellenvorrichtung (16), wobei das Verfahren Folgendes umfasst:
Empfangen von Schadensinformationen durch die Benutzerschnittstellenvorrichtung (16);
Quantifizieren mindestens eines Parameters des Schadens;
Durchführen einer Strukturanalyse zum Bestimmen einer Schadenszulässigkeit basierend auf dem mindestens einen Parameter (74); und
Anzeigen eines Ausgabeergebnisses der Strukturanalyse durch die Benutzerschnittstellenvorrichtung (16),
**dadurch gekennzeichnet, dass**
das Durchführen der Strukturanalyse zum Bestimmen der Schadenszulässigkeit das Erzeugen mindestens einer Frage (78) basierend auf dem mindestens einen Parameter (74) umfasst.

2. Computerimplementiertes Verfahren nach Anspruch 1, wobei das Durchführen der Strukturanalyse zum Bestimmen der Schadenszulässigkeit das Anzeigen der mindestens einen Frage (78) in Bezug auf den mindestens einen Parameter (74) umfasst.

3. Computerimplementiertes Verfahren nach Anspruch 1 oder 2, wobei das Durchführen der Strukturanalyse zum Bestimmen der Schadenszulässigkeit das Beantworten der mindestens einen Frage (78) umfasst.

4. Computerimplementiertes Verfahren nach Anspruch 3, wobei das Durchführen der Strukturanalyse zum Bestimmen der Schadenszulässigkeit das Bewerten einer zulässigen Schadensgrenze basierend auf der Beantwortung der mindestens einen Frage (78) umfasst.

5. Computerimplementiertes Verfahren nach Anspruch 4, wobei das Durchführen der Strukturanalyse zum Bestimmen der Schadenszulässigkeit das Vergleichen der zulässigen Schadensgrenze mit dem mindestens einen Parameter (74) umfasst.

6. Computerimplementiertes Verfahren nach einem der Ansprüche 1 bis 5, wobei das Empfangen der Schadensinformationen das Anzeigen von Strukturinformationen über die Struktur umfasst.

7. Computerimplementiertes Verfahren nach einem der Ansprüche 1 bis 6, wobei das Quantifizieren des mindestens einen Parameters (74) das Messen des Schadens umfasst.

8. Computerimplementiertes Verfahren nach einem der Ansprüche 1 bis 7, wobei das Quantifizieren des mindestens einen Parameters (74) das elektronische Dokumentieren des Schadens umfasst.

9. Computerimplementiertes Verfahren nach einem der Ansprüche 1 bis 8, wobei das Anzeigen des Ausgabeergebnisses das Anzeigen von Wartungsanweisungen umfasst.

10. System zur Bewertung einer zulässigen Schadensgrenze für einen Schaden einer Struktur, wobei das System Folgendes umfasst:
ein Compliance-System mit einer Datenbank (24) mit Strukturinformationen, die sich auf die Struktur beziehen; und
eine computergestützte Benutzerschnittstellenvorrichtung (16), die mit dem Compliance-System gekoppelt ist, wobei die Benutzerschnittstellenvorrichtung (16) einen Prozessor aufweist, der konfiguriert ist zum:
Empfangen der Strukturinformationen;
Anzeigen einer Position des Schadens basierend auf den Strukturinformationen;
Quantifizieren mindestens eines Parameters (74) des Schadens;
Durchführen einer Strukturanalyse zum Bestimmen einer Schadenszulässigkeit basierend auf dem mindestens einen Parameter (74); und
Anzeigen einer Wartungsanweisung basierend auf der Schadenszulässigkeit;
**dadurch gekennzeichnet, dass**
der Prozessor konfiguriert ist zum Bestimmen der Schadenszulässigkeit durch Erzeugen mindestens einer Frage (78) basierend auf dem mindestens einen Parameter (74).

11. System nach Anspruch 10, wobei der mindestens eine Parameter (74) eine Längenabmessung, eine Breitenabmessung und/oder eine Tiefenabmessung des Schadens umfasst.

12. System nach Anspruch 10, wobei die Strukturinformationen mindestens eine Frage (78) umfassen, die sich auf den Schaden bezieht.

13. System nach Anspruch 10, wobei die Wartungsanweisung eine Reparaturanweisung umfasst.

## Revendications

1. Procédé informatisé d'évaluation d'un dommage sur une structure (14) au moyen d'un appareil à interface utilisateur (16), le procédé comprenant :
la réception d'informations relatives au dommage par l'appareil à interface utilisateur (16),
la quantification d'au moins un paramètre du dommage,
la réalisation d'une analyse structurelle visant à déterminer l'admissibilité du dommage compte tenu de l'au moins un paramètre (74), et
l'affichage, par l'appareil à interface utilisateur (16), du résultat de l'analyse structurelle produit ;
**caractérisé en ce que**
la réalisation de l'analyse structurelle visant à déterminer l'admissibilité du dommage comprend la production d'au moins une question (78) en fonction de l'au moins un paramètre (74).

2. Procédé informatisé selon la revendication 1, dans lequel la réalisation de l'analyse structurelle visant à déterminer l'admissibilité du dommage comprend l'affichage de l'au moins une question (78) concernant l'au moins un paramètre (74).

3. Procédé informatisé selon les revendications 1 ou 2, dans lequel la réalisation de l'analyse structurelle visant à déterminer l'admissibilité du dommage comprend la réponse à l'au moins une question (78).

4. Procédé informatisé selon la revendication 3, dans lequel la réalisation de l'analyse structurelle visant à déterminer l'admissibilité du dommage comprend l'évaluation d'une limite de dommage admissible compte tenu de la réponse à l'au moins une question (78).

5. Procédé informatisé selon la revendication 4, dans lequel la réalisation de l'analyse structurelle visant à déterminer l'admissibilité du dommage comprend la comparaison de la limite de dommage admissible à l'au moins un paramètre (74).

6. Procédé informatisé selon l'une quelconque des revendications 1 à 5, dans lequel la réception des informations relatives au dommage comprend l'affichage d'informations structurelles de la structure.

7. Procédé informatisé selon l'une quelconque des revendications 1 à 6, dans lequel la quantification de l'au moins un paramètre (74) comprend la mesure du dommage.

8. Procédé informatisé selon l'une quelconque des revendications 1 à 7, dans lequel la quantification de l'au moins un paramètre (74) comprend la documentation électronique du dommage.

9. Procédé informatisé selon l'une quelconque des revendications 1 à 8, dans lequel l'affichage du résultat produit comprend l'affichage d'instructions de maintenance.

10. Système d'évaluation d'une limite de dommage admissible relative à un dommage sur une structure, ledit système comprenant :
un système de conformité renfermant une base de données (24) d'informations structurelles concernant la structure, et
un appareil à interface utilisateur (16) informatisé, couplé audit système de conformité, ledit appareil à interface utilisateur (16) possédant un processeur conçu pour :
recevoir les informations structurelles,
afficher l'emplacement du dommage compte tenu des informations structurelles,
quantifier au moins un paramètre (74) du dommage,
réaliser une analyse structurelle visant à déterminer l'admissibilité du dommage compte tenu de l'au moins un paramètre (74), et
afficher une instruction de maintenance compte tenu de l'admissibilité du dommage ;
**caractérisé en ce que**
ledit processeur est conçu pour déterminer l'admissibilité du dommage en produisant au moins une question (78) en fonction de l'au moins un paramètre (74).

11. Système selon la revendication 10, dans lequel l'au moins un paramètre (74) comprend une dimension de longueur, une dimension de largeur et/ou une dimension de profondeur du dommage.

12. Système selon la revendication 10, dans lequel lesdites informations structurelles comprennent au moins une question (78) concernant le dommage.

13. Système selon la revendication 10, dans lequel ladite instruction de maintenance comprend une instruction de réparation.
